(19) Europäisches Patentamt
European Patent Office
Office européen des brevets

(11) **EP 1 229 069 B1**

(12) **FASCICULE DE BREVET EUROPEEN**

(45) Date de publication et mention
de la délivrance du brevet:
**05.03.2008 Bulletin 2008/10**

(51) Int Cl.:
***C08J 9/14*** *(2006.01)*     ***C08J 9/12*** *(2006.01)*

(21) Numéro de dépôt: **02290118.5**

(22) Date de dépôt: **17.01.2002**

(54) **Agent d'expansion à base de HFC-134A et de cyclopentane**

Treibmittel auf Basis von HFC-134a und Cyclopentan

Blowing agent containing on HFC-134a and cyclopentane

(84) Etats contractants désignés:
**AT BE CH CY DE DK ES FI FR GB GR IE IT LI LU MC NL PT SE TR**

(30) Priorité: **02.02.2001 FR 0101415**

(43) Date de publication de la demande:
**07.08.2002 Bulletin 2002/32**

(73) Titulaire: **ARKEMA FRANCE**
**92700 Colombes (FR)**

(72) Inventeurs:
• **Albouy, Arnaud**
**75017 Paris (FR)**
• **Guilpain, Gérard**
**92500 Rueil Malmaison (FR)**
• **Master Crooker, Richard**
**Fogelsville, PA 18051 (US)**

(74) Mandataire: **Dang, Doris et al**
**ARKEMA FRANCE**
**Département Propriété Industrielle**
**420, rue d'Estienne d'Orves**
**92705 Colombes Cedex (FR)**

(56) Documents cités:
**WO-A-00/01761        DE-A- 19 817 507**

• **DATABASE WPI Section Ch, Week 198928 Derwent Publications Ltd., London, GB; Class E19, AN 1989-202050 XP002179065 & JP 01 139675 A (ASAHI GLASS CO LTD) 1 juin 1989 (1989-06-01)**

## Description

La présente invention a pour objet l'utilisation d'une composition utilisable comme agent d'expansion de polymère, une composition polymérique la comprenant et un procédé de préparation de polymère expansé par extrusion mettant en oeuvre cette dernière composition. Elle concerne plus particulièrement un procédé de préparation de plaques de polystyrène extrudé expansé.

En général, les polymères expansés sont fabriqués en fondant sous pression dans une extrudeuse des granulés de polymère thermoplastique, puis en mélangeant à la résine fondue un agent d'expansion volatil, dans des conditions contrôlées de température et de pression permettant le maintien de ce mélange dans un état essentiellement liquide ou visqueux. Ce mélange est ensuite extrudé à travers une filière dans une zone portée à une pression plus basse et à une température fixée (en général à pression atmosphérique et à température ambiante), de manière à obtenir une structure polymérique solide de forme désirée qui présente une multiplicité de cellules substantiellement fermées dont la taille est généralement comprise entre 0,1 et 1,5 mm. Par cellules fermées, on entend des cellules non interconnectées, autrement dit séparées les unes des autres par une paroi de matériau polymérique dont l'épaisseur est de l'ordre du micromètre.

Une telle structure polymérique peut être utilisée sous la forme de feuilles en vue d'une utilisation comme matériau thermoformable pour la production d'emballage alimentaire, ou bien sous la forme de plaques convenant à l'isolation thermique dans le domaine du bâtiment. L'épaisseur des feuilles expansées par extrusion est généralement comprise entre 0,5 et 10 mm, de préférence entre 1 et 8 mm ; l'épaisseur des plaques d'isolation est habituellement comprise entre 10 et 200 mm, de préférence entre 20 et 160 mm. La masse volumique d'un matériau expansé par extrusion est souvent comprise entre 10 et 250 kg/m$^3$, celle des feuilles étant de préférence comprise entre 50 et 150 kg/m$^3$ ; celle des plaques est comprise entre 20 et 60 kg/m$^3$, encore plus préférentiellement entre 25 et 50 kg/m$^3$.

Les propriétés d'isolation thermique des polymères expansés dérivent en grande partie de la conductivité thermique du gaz qui remplit les cellules fermées du matériau, et qui est introduit durant le procédé de fabrication en tant qu'agent d'expansion.

Le 1,1-difluoro-1-chloroéthane, de formule $CF_2Cl\text{-}CH_3$ (couramment dénommé HCFC-142b), ainsi que ses mélanges avec le difluorochlorométhane (couramment dénommé HCFC-22) sont les agents d'expansion les plus utilisés dans le monde pour la fabrication des plaques de polystyrène expansé destinées à l'isolation thermique. Ces gaz tendent cependant avec le vieillissement des polymères expansés à migrer à travers les parois des cellules fermées du matériau isolant, en raison de leur perméabilité dans ce milieu, et à rejoindre l'atmosphère où, en raison de leur ODP (Ozone Depleting Potential) non nul, ils sont susceptibles de représenter une menace pour l'environnement, notamment pour la couche d'ozone stratosphérique.

Il est donc nécessaire de substituer les HCFC (HydroChloroFluoroCarbures) utilisés actuellement dans les polymères expansés extrudés par des HFC (HydroFluoroCarbures) dont la molécule, ne contenant pas d'atome de chlore, présente un ODP égal à 0. Les HFC ont été développés par ailleurs pour le domaine de la réfrigération. Cette nécessité de substitution est renforcée par une prochaine interdiction légale des HCFC en Europe.

La demande internationale WO 98/03581 décrit l'utilisation de l'HFC-134 (1,1,2,2-tétrafluoroéthane) pour la production de mousses thermoplastiques. Toutefois l'HFC-134 bien que possédant avantageusement un ODP égal à 0, n'est pas un produit largement disponible au plan industriel.

Dans le cadre de leur Programme pour l'Environnement (UNEP : United Nations Environment Programme), les Nation Unies ont publié en Avril 2000 un rapport intitulé "Report of the Technology and Economic Assessment Panel" concernant le Protocole de Montréal relatif à des substances qui appauvrissent la couche d'ozone. Ce rapport préconise (pages 62 et 63) le HFC-152a (1,1-difluoroéthane) comme agent d'expansion de type HFC destiné à la fabrication de plaque de polystyrène expansé. Toutefois ce composé présente une perméabilité élevée dans le polystyrène qui, par suite de la substitution progressive dans les cellules fermées de l'agent d'expansion par de l'air de plus grande conductivité thermique, conduit à une dégradation dans le temps rapide des propriétés isolantes des plaques de polystyrène correspondantes.

Parmi les HFC substituts qui peuvent être envisagés, le HFC-134a (1,1,1,2-tetrafluoroéthane) peut permettre, en raison de sa faible conductivité thermique, l'obtention de propriétés isolantes pour le polymère expansé formé équivalentes à celles obtenues avec le HCFC-142b. De plus, ces deux molécules ont une faible perméabilité à travers le polymère, de sorte que les bonnes propriétés d'isolation thermiques se maintiennent avantageusement dans le temps, même après de nombreuses années. Le HFC-134a est en outre très largement produit industriellement, en raison de ses applications dans le domaine de la réfrigération.

Le rapport UNEP mentionné ci-dessus enseigne toutefois qu'il est techniquement difficile de fabriquer du polystyrène expansé par extrusion en utilisant le HFC-134a comme seul agent d'expansion, en raison de la très faible solubilité de ce composé dans le polystyrène fondu.

En effet, pour l'obtention d'un polymère expansé de bonne qualité, la solubilité de l'agent d'expansion dans le polymère fondu doit être suffisamment élevée, notamment dans les conditions de température auxquelles le mélange agent d'expansion/polymère fondu séjourne dans la chambre de l'extrudeuse et passe à travers la filière. Le domaine de température correspondant est généralement compris entre 100 et 300°C, de préférence entre 110 et 200°C. Si cette solubilité est insuffisante ou trop faible, il y a un défaut d'homogénéïté du mélange, et l'agent d'expansion se vaporise prématurément en sortie de filière, de sorte qu'une proportion élevée des cellules du matériau ont leurs parois mal formées ou absentes, ce qui conduit à une dégradation de la rigidité du matériau et plus généralement de ses propriétés mécaniques. On observe également dans un tel cas une masse volumique trop élevée pour l'application désirée.

Le rapport UNEP suggère pour remédier à ce problème d'utiliser le HFC-134a en combinaison avec un co-agent d'expansion organique, sans recommander toutefois un composé organique spécifique.

La présente invention a donc notamment pour but de proposer un agent d'expansion pour la préparation de mousse thermoplastique isolante, ne présentant pas de danger pour la couche d'ozone stratosphérique (ODP égal à 0), à base d'HFC disponible industriellement, et pouvant se substituer au HCFC-142b en raison d' une conductivité thermique, d'une perméabilité et d'une solubilité dans le polymère fondu sensiblement équivalentes.

Il a à présent été trouvé que le cyclopentane possède de façon surprenante, et à la différence d'autres composés organiques similaires, une solubilité dans le polystyrène fondu particulièrement élevée, et que les mélanges du cyclopentane avec l'HFC-134a sont bien adaptés à la préparation de polymères expansés par extrusion, et notamment de plaques de polystyrène expansé.

La présente invention a donc pour objet en premier lieu l'utilisation d'une composition comme agent d'expansion de polymère, comprenant :

- de 60 à 98 % de HFC-134a, de préférence de 70 à 96 %, et
- de 2 à 40 % de cyclopentane, de préférence de 4 à 30 %.

Les pourcentages indiqués dans le présent texte sont, en l'absence d'indications contraires, des pourcentages en poids. Cette composition peut être préparée directement par simple mélange des constituants et est injectée dans la chambre d'extrusion sous une pression supérieure à 10 MPa. Elle peut être obtenue aussi par injection de chacun des constituants séparément dans la chambre d'extrusion. Elle peut comprendre en outre de 0,5% à 33%, de préférence de 1% à 26% d'un ou plusieurs autres agents d'expansion tels que le dioxyde de carbone, un hydrocarbure, un alcool tel que l'éthanol, un éther tel que le diméthyléther, le chlorure d'éthyle ou encore un autre HFC.

En raison d'une solubilité dans les polymères fondus, et notamment dans le polystyrène, voisine de celles de l'HCFC-142b et de l'HFC-152a, la composition selon l'invention permet l'obtention d'un polymère expansé homogène et présentant une distribution uniforme des cellules fermées dans le matériau, ayant pour effet les qualités mécaniques requises.

L'invention concerne également une composition polymérique utilisable dans la préparation d'un polymère expansé comprenant :

- de 5 à 15 % , de préférence de 7 à 12 % d'un agent d'expansion tel que défini précédemment, et
- de 85 à 95 %, de préférence de 88 à 93 % d'un polymère thermoplastique.

Cette composition est préparée par mélange à chaud de ses ingrédients dans la chambre d'extrusion, à une température comprise entre 100 et 300 °C, de préférence entre 110 et 200 °C, et à une pression comprise entre 5 et 30 Mpa. La pression de la zone située juste en amont de la filière est habituellement comprise entre 5 et 20 Mpa, de préférence entre 6 et 15 MPa. Ce dernier domaine de pression est particulièrement avantageux en ce qui concerne l'économie du procédé et la possibilité d'utiliser un dispositif d'extrusion existant, tel que celui utilisé avec le HCFC-142b. L'utilisation d'une pression comprise dans ce dernier intervalle résulte avantageusement de la solubilité élevée de l'agent d'expansion selon l'invention dans le polymère thermoplastique.

L'agent d'expansion selon l'invention peut être utilisé en combinaison avec toute résine thermoplastique convenant à l'extrusion, telle que le polyéthylène, le polypropylène, le polystyrène, le polychlorure de vinyle.

Selon une variante préférée, le polymère thermoplastique est le polystyrène.

Des composés auxiliaires peuvent également être compris dans la composition tels qu'un (ou plusieurs) agent ignifugeant, agent de nucléation destiné à améliorer l'homogénéité de la structure cellulaire, agent colorant, des agents plastifiants tels que les polyarylalcanes (par exemple xylylxylène, benzyltoluène ou dibenzyltoluène). La quantité de ces composés est généralement comprise entre 0,01% et 10%, de préférence entre 1% et 5%.

L'invention concerne enfin un procédé de fabrication de polymère expansé comprenant l'extrusion à travers une filière d'une composition polymérique telle que définie précédemment.

Selon une variante préférée, l'extrusion est mise en oeuvre dans un dispositif convenant à l'utilisation comme agent d'expansion du HCFC-142b. Cette possibilité résulte de la solubilité élevée d'une composition HFC-134a/cyclopentane telle que décrite précédemment et est avantageuse car il n'est pas nécessaire de développer un nouveau matériel.

On préfère mettre en oeuvre ce procédé pour la fabrication de plaques de polystyrène expansé convenant à l'isolation thermique, notamment des bâtiments.

**Figures** :

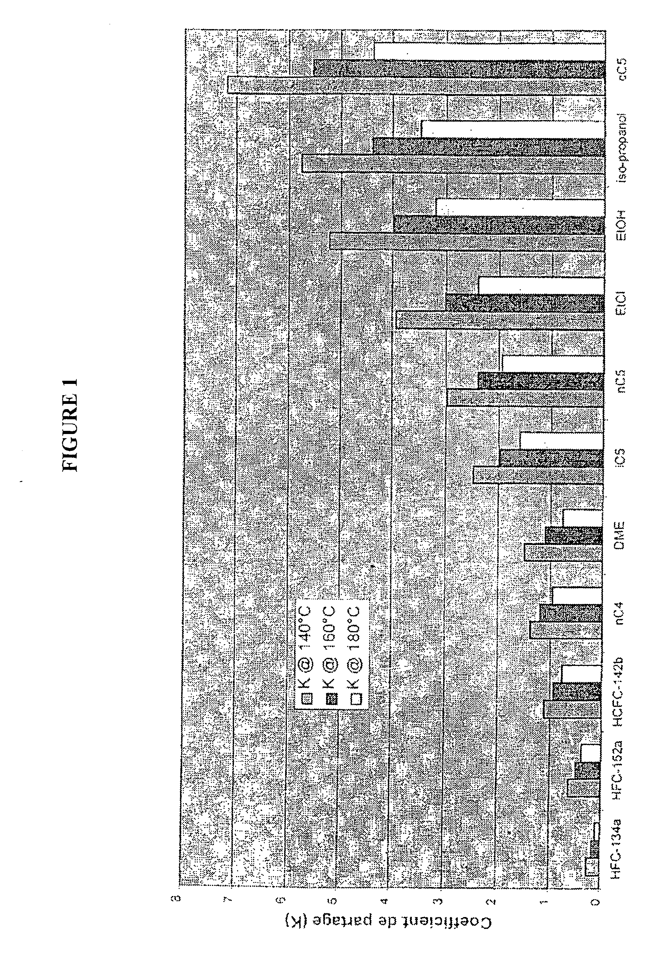

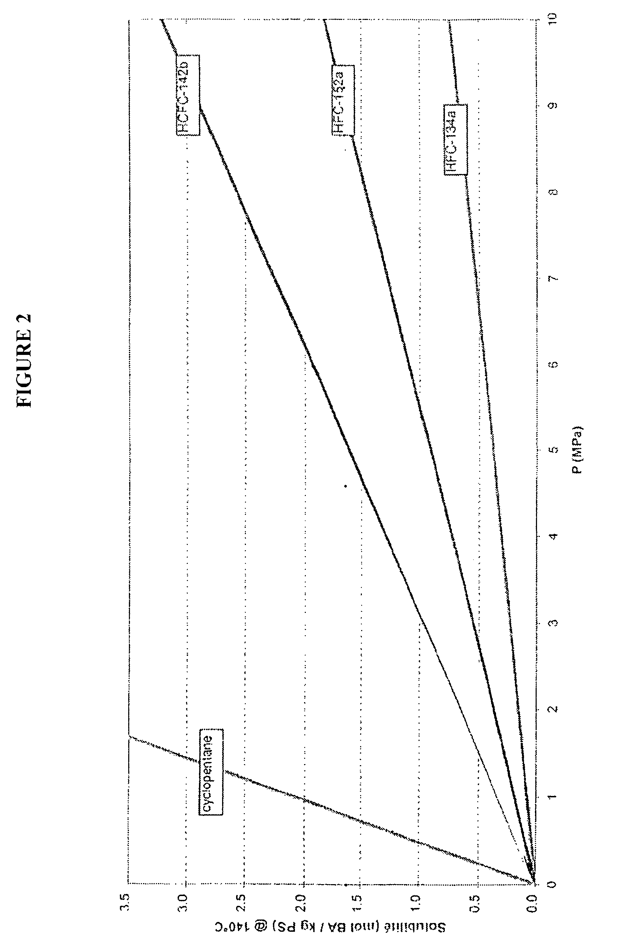

Les figures 1 et 2 illustrent certains aspects de l'invention et l'aptitude des mélanges HFC-134a/cyclopentane selon l'invention à être utilisés comme agent d'expansion pour la préparation de polymères expansés.

**Figure 1 :**

La figure 1 représente la solubilité à 140, 160 et 180°C de divers composés organiques dans le polystyrène, en tant que polymère thermoplastique représentatif.

La grandeur portée en ordonnée du graphique est égale au coefficient de partage (K) du soluté à dilution infinie entre une phase polymère (en l'espèce le polystyrène) et une phase mobile (à savoir l'hélium) et est mesurée par chromatographie inverse en phase gazeuse.

Cette grandeur est directement proportionnelle à la solubilité, l'équation les reliant étant la suivante :

$$S = K/RT \quad (1)$$

dans laquelle :

S est le coefficient de solubilité exprimé en $mol.Pa^{-1}.m^{-3}$

K est le coefficient de partage (sans dimension)

R est la constante des gaz parfaits (exprimée en $m^3.Pa.mol^{-1}.K^{-1}$)

T est la température absolue (exprimée en K).

Le polystyrène utilisé pour la mesure a pour température de transition vitreuse environ 100 °C et a pour masse molaire en poids 250000 g/mol.

Les températures retenues pour la détermination de la solubilité sont représentatives de celles auxquelles est porté le mélange agent d'expansion/résine thermoplastique dans la chambre d'extrusion.

Les abréviations utilisées pour représenter les composés testés et portées en abscisse du graphique ont la signification suivante :

nC4 représente le n-butane
DME représente le diméthyléther
iC5 représente l'isopentane
nC5 représente le n-pentane
EtCl est le chlorure d'éthyle
EtOH est l'éthanol
cC5 représente le cyclopentane

Cette figure fait apparaître clairement que la solubilité de l'HFC-134a est bien inférieure à celle de l'HCFC-142b, ce qui confirme l'enseignement du rapport UNEP cité précédemment.

De plus, elle montre que, de façon inattendue, la solubilité du cyclopentane est, pour les températures étudiées, largement supérieure à celle d'autres composés organiques, notamment à celle des alcanes à 5 carbones non cycliques correspondants.

Ce fait permet de sélectionner avantageusement le cyclopentane comme conduisant en mélange avec l'HFC-134a à un agent d'expansion approprié à la préparation de polystyrène expansé et autres polymères thermoplastiques.

**Figure 2 :**

Le graphe de la figure 2 représente la courbe de la solubilité dans le polystyrène fondu (exprimée en mole d'agent d'expansion par kg de polystyrène) en fonction de la pression (exprimée en MPa) des composés suivants : cyclopentane, HCFC-142b, HFC-152a, HFC-134a.

Ces courbes sont calculées pour la température de 140°C à partir des données précédentes, par calcul de la solubilité au moyen de l'équation (1) puis par application de la loi de Henry.

Le domaine de pression compris entre 6 et 10 MPa est représentatif de la pression existant dans la zone située juste en amont de la filière d'un équipement d'extrusion conventionnel, tel que convenant à l'utilisation comme agent d'expansion du HCFC-142b.

Cette figure montre clairement la différence de solubilité entre l'HFC-134a (inapproprié, seul, en tant qu'agent d'expansion) d'une part, et les HCFC-142b et HFC-152a d'autre part (qui conviennent à ce même usage). Elle montre par conséquent dans quel domaine doit de préférence se situer la solubilité d'un agent d'expansion pour pouvoir être utilisable comme agents d'expansion de polymères, notamment du polystyrène, et plus particulièrement en ce qui concerne l'homogénéïté de la structure cellulaire et les propriétés mécaniques d'une plaque de polystyrène expansé préparée par mise en oeuvre du dit agent.

Les exemples suivants illustrent l'invention sans la limiter.

Exemple 1 :

On prépare par simple mélange 10 g d'une composition contenant 96 % d'HFC-134a et 4 % de cyclopentane.

5 g de polystyrène, ayant pour température de transition vitreuse environ 100°C et une masse molaire en poids de l'ordre de 250000 g/mol, sont placés dans un autoclave de 200 $cm^3$. Les 10 g du mélange HFC-134a/cyclopentane ci-dessus sont ensuite introduits dans ce même autoclave à température ambiante.

On augmente alors la température de l'autoclave jusqu'à 140°C. Une fois l'équilibre atteint, on enregistre la pression à l'intérieur de l'autoclave et on détermine le nombre de mole d'agent d'expansion solubilisé dans le polystyrène.

Le point expérimental obtenu permet de tracer sur le graphique de la figure 2 une droite de solubilité qui se trouve être sensiblement superposée avec celle représentant la solubilité du HFC-152a.

Cette composition convient par conséquent à la préparation de polystyrène expansé par extrusion.

Exemple 2 :

L'exemple 1 est répété pour une composition contenant 91 % d'HFC-134a et 9 % de cyclopentane.

Le point expérimental obtenu permet de tracer sur le graphique de la figure 2 une droite de solubilité qui se trouve être sensiblement superposée avec celle représentant la solubilité du HCFC-142b.

Cette composition convient par conséquent également à la préparation de polystyrène expansé par extrusion.

Exemple 3 :

100 parties en poids de polystyrène ayant une masse molaire en poids d'environ 180 000 g/mol, 1,5 parties d'hexabromocyclododécane en tant que ignifugeant et 0,5 partie de talc comme agent de nucléation sont alimentées en continu dans une extrudeuse fonctionnant habituellement au HCFC-142b et ayant un diamètre de vis interne de 120 mm. Un mélange de 92% d'HFC-134a et 8 % de cyclopentane (ledit mélange représentant au total 12 % en poids de la composition thermoplastique) est injecté en continu dans l'extrudeuse. La composition thermoplastique est mélangée uniformément dans l'extrudeuse et, après un temps de séjour de 15 minutes, refroidie à une température de sortie de 115°C et extrudée à pression atmosphérique à travers une filière de dimensions appropriées.

On obtient une plaque rectangulaire de polystyrène expansé homogène et de caractéristiques physiques et mécaniques similaires à celles obtenues lorsque l'on utilise avec le même dispositif de l'HCFC-142b comme agent d'expansion.

**Revendications**

1. Utilisation, comme agent d'expansion de polymère, d'une composition comprenant:

   - de 60 à 98 % de HFC-134a, de préférence de 70 à 96 %, et
   - de 2 à 40 % de cyclopentane, de préférence de 4 à 30 %.

2. Composition selon la revendication 1 comprenant en outre de 0,5% à 33%, de préférence de 1% à 26% d'un ou plusieurs autres agents d'expansion tels que le dioxyde de carbone, un hydrocarbure, un alcool tel que l'éthanol, un éther tel que le diméthyléther, le chlorure d'éthyle ou encore un autre HFC

3. Composition polymérique utilisable dans la préparation d'un polymère expansé comprenant :

   - de 5 à 15 % , de préférence de 7 à 12 % d'une composition telle que définie dans l'une des revendications 1 ou 2, en tant qu'agent d'expansion, et
   - de 85 à 95 %, de préférence de 88 à 93 % d'un polymère thermoplastique.

4. Composition selon la revendication 3 **caractérisée en ce que** le polymère thermoplastique est le polyéthylène, le polypropylène, le polystyrène, ou le polychlorure de vinyle.

5. Composition selon l'une des revendications 3 ou 4 **caractérisée en ce que** le polymère thermoplastique est le polystyrène.

6. Composition selon l'une des revendications 3 à 5, **caractérisée en ce qu'**elle comprend en outre de 0,01% à 10%, de préférence de 1% à 5% d'un agent ignifugeant, d'un agent de nucléation, d'un agent colorant et/ou d'un agent plastifiant.

7. Procédé de fabrication de polymère expansé comprenant l'extrusion à travers une filière d'une composition polymérique telle que définie dans l'une des revendications 3 à 6.

8. Procédé selon la revendication 7, **caractérisé en ce que** l'extrusion est mise en oeuvre dans un dispositif convenant à l'utilisation comme agent d'expansion du HCFC-142b.

9. Procédé selon l'une des revendications 7 ou 8, **caractérisé en ce qu'**il est mis en oeuvre pour la fabrication de plaques de polystyrène expansé convenant à l'isolation thermique.

**Claims**

1. Use, as a polymer blowing agent, of a composition comprising:

   - from 60 to 98%, preferably from 70 to 96%, of HFC-134a, and
   - from 2 to 40%, preferably from 4 to 30%, of cyclopentane.

2. Composition according to Claim 1, which furthermore includes from 0.5% to 33%, preferably from 1% to 26%, of one or more other blowing agents such as carbon dioxide, a hydrocarbon, an alcohol such as ethanol, an ether such as dimethyl ether, ethyl chloride or even another HFC.

3. Polymeric composition which can be used in the production of an expanded polymer, comprising:

   - from 5 to 15%, preferably from 7 to 12%, of composition as defined in either of Claims 1 and 2, as a composition blowing agent; and
   - from 85 to 95%, preferably from 88 to 93%, of a thermoplastic polymer.

4. Composition according to Claim 3, **characterized in that** the thermoplastic polymer is polyethylene, polypropylene, polystyrene, or polyvinyl chloride.

5. Composition according to either of Claims 3 and 4, **characterized in that** the thermoplastic polymer is polystyrene.

6. Composition according to one of Claims 3 to 5, **characterized in that** it furthermore includes from 0.01% to 10%, preferably from 1% to 5%, of a fire retardant, a nucleating agent, a colouring agent and/or a plasticizer.

7. Process for manufacturing an expanded polymer, comprising the extrusion through a die of a polymeric composition as defined in one of Claims 3 to 6.

8. Process according to Claim 7, **characterised in that** the extrusion is carried out in an extruder suitable for the use of HCFC-142b as blowing agent.

9. Process according to either of Claims 7 and 8, **characterized in that** it is carried out for the manufacture of expanded polystyrene panels suitable for thermal insulation.

**Patentansprüche**

1. Verwendung einer Zusammensetzung, enthaltend

   - 60 bis 98% H-FKW 134a, vorzugsweise 70 bis 96%, und
   - 2 bis 40% Cyclopentan, vorzugsweise 4 bis 30%,

   als Polymertreibmittel.

2. Zusammensetzung nach Anspruch 1, die außerdem 0,5 bis 33% und vorzugsweise 1 bis 26% eines oder mehrerer anderer Treibmittel wie Kohlendioxid, einen Kohlenwasserstoff, einen Alkohol wie Ethanol, einen Ether wie Dimethylether, Ethylchlorid oder auch einen anderen H-FKW enthält.

3. Polymerzusammensetzung, die bei der Herstellung eines geschäumten Polymers verwendet werden kann, enthaltend:

   - 5 bis 15% und vorzugsweise 7 bis 12% einer Zusammensetzung gemäß Anspruch 1 oder 2 als Treibmittel und
   - 85 bis 95% und vorzugsweise 88 bis 93% eines thermoplastischen Polymers.

4. Zusammensetzung nach Anspruch 3, **dadurch gekennzeichnet, daß** es sich bei dem thermoplastischen Polymer um Polyethylen, Polypropylen, Polystyrol oder Polyvinylchlorid handelt.

5. Zusammensetzung nach Anspruch 3 oder 4, **dadurch gekennzeichnet, daß** es sich bei dem thermoplastischen Polymer um Polystyrol handelt.

6. Zusammensetzung nach einem der Ansprüche 3 bis 5, **dadurch gekennzeichnet, daß** sie außerdem 0,01 bis 10% und vorzugsweise 1 bis 5% eines Flammschutzmittels, eines Nukleierungsmittels, eines Farbmittels und/oder eines Weichmachers enthält.

7. Verfahren zur Herstellung eines geschäumten Polymers, bei dem man eine Polymerzusammensetzung gemäß einem der Ansprüche 3 bis 6 durch eine Düse extrudiert.

8. Verfahren nach Anspruch 7, **dadurch gekennzeichnet, daß** man die Extrusion in einer zur Verwendung von H-FCKW 142b als Treibmittel geeigneten Vorrichtung durchführt.

9. Verfahren nach Anspruch 7 oder 8, **dadurch gekennzeichnet, daß** man es zur Herstellung von Platten aus geschäumtem Polystyrol, die zur Wärmeisolierung geeignet sind, durchführt.

**FIGURE 1**

FIGURE 2

EP 1 229 069 B1

**EP 1 229 069 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9803581 A